# EUROPEAN PATENT APPLICATION

(11) **EP 2 428 924 A1**
(43) Date of publication of application: **14.03.2012**
(21) Application number: 10174336.7
(22) Date of filing: 27.08.2010
(51) Int. Cl.: G06Q 30/00

(54) **Coordinated automatic ad placement for personal content channels**

(71) Applicant: Axel Springer Digital TV Guide GmbH, 10117 Berlin (DE)
(72) Inventor: Barbieri, Mauro, 5613 LC, Eindhoven (NL); Pronk, Serverius Petrus Paulus, 5262 CN, Vught (NL); Korst, Jan, 5616, BL Eindhoven (NL)
(74) Representative: Eisenführ, Speiser & Partner

(57) **Abstract**

The present invention relates to an apparatus, a method and a computer program product for automatically inserting advertisements into a media stream, wherein subscription information which specifies categories of advertisements to be scheduled for insertion is stored and a category of a target advertisement is determined. Based on the result of the determination those advertisements of a stored list of scheduled advertisements, which according to their subscription information are subscribed to the determined category, are triggered and subjected to a predetermined modification processing selected based on the result of the determination.

## Description

### FIELD OF THE INVENTION

The present invention relates to an apparatus, a method, and a computer program product for automatic insertion of advertisements into a stream of content items.

### BACKGROUND OF THE INVENTION

Content aggregators, web services, software providers, etc., rely on advertising as main revenue source. The idea is that users get free content in exchange for being exposed to commercial messages or advertisements (ads). For example, commercial broadcasters offer free television (TV) content to attract viewers and then sell ad spaces to advertisers for inserting commercials. Many web sites offer free services (e.g. Internet search) to attract visitors to their website and sell space for commercial messages in the form of graphical animated banners or 'sponsored links'.

In the following, the word "content" is to be interpreted as any type of audio, video or text information that may provide value for an end-user in specific contexts. Content may be delivered via any media stream or channel such as for example the internet, TV, and audio or video record carriers (e.g. compact discs (CDs) or digital versatile discs (DVDs)).

In conventional ad placement systems, the current picture of users applied is not far reaching enough to provide relevant ads at the user level. While groups of people who enjoy "sports" can be identified from some generalized behavior, the information is not granular enough to be of particular relevance to any one user within the overall group. As a result, the advertising targeting experience today serves more to annoy users with spam like targeting of irrelevant advertisements, turning the whole purpose of such systems on its head. Given the fact that users are mostly interested in their offered service or content and do not want their experience to be disrupted by commercial messages, technologies have been developed to make advertisements at least more acceptable by targeting them to each individual's behavior, preferences and, more importantly, to the context in which they are placed.

For example, using keyword advertising and ad serving technologies, advertisers can select keywords, domain names, topics, and demographic targets, and ads are placed only on the websites and web pages containing content that is relevant for the target customer. Advertisers select the words that should trigger their ads. When a user uses a search engine ads (also known as "creatives") are shown as "sponsored links", e.g., on the right side of the screen, and sometimes above the main search results. In ad serving technologies, the webmaster inserts a predetermined script code into a webpage. Each time this page is visited, the script code initiates the display of a piece of content or content item fetched from a dedicated server. For contextual advertisements, dedicated servers use a cache of a target page to determine a set of high-value keywords. If keywords have been cached already, advertisements are served for those keywords based on a keyword advertising bidding system. For site-targeted advertisements, the advertiser chooses the page(s) on which to display advertisements.

Additionally, personal TV solutions which include automatic targeted advertising built on top of recommender technology allow advertisers to place their ads in the best possible way based on actual viewing habits and preferences. At the same time, the viewer's experience is enriched by advertisements that are tailored to a specific profile and are thus either relevant or entertaining.

The use of recommender technology is steadily being introduced into the market. Among various examples, websites offer a recommender to support users in finding content items (e.g. movies) they like, and electronics devices (e.g. personal video recorders) use recommender for automatic filtering of content items. Recommender systems are increasingly being applied to individualize or personalize services and products by learning a user profile, wherein machine learning techniques can be used to infer the ratings of new content items. Recommenders are typically offered as stand-alone services or units, or as add-ons (e.g. plug-ins) to existing services or units. They typically require user feedback to learn a user's preferences. Implicit learning frees the user from having to explicitly rate items, or at least mitigates this problem, and may be done by observing user actions such as purchases, downloads, selections of items for play back or deletion, etc. Detected user actions are interpreted by the recommender and translated into a rating. Typically, a user profile is built by gathering or deriving information from users about what they need and it is refined by using the user's preference about the chosen content items.

However, advertisers are increasingly faced with a crowded advertising space in which consumers' attention is spread across more and more channels packed with commercial messages from various brands. While they struggle to keep the viewer's attention, these viewers are becoming accustomed to pick and choose what to watch and to discard advertisements that are not interesting to them. Users have to deal with the so-called "information overload" consisting of an overwhelming amount of (commercial) information they cannot cope with and that restricts their ability to find what they like, stay focused, and concentrate on things that are worthwhile according to their interests.

### SUMMARY OF THE INVENTION

It is an object of the present invention to provide an enhanced automatic ad placement process and apparatus which allow placing ads in a coordinated way.

This object is achieved by a method as claimed in claim 1, an apparatus as claimed in claim 11, and a computer program product as claimed in claim 12.

Accordingly, a fully automated and targeted advertising system can be provided that allows advertisers to place ads in a coordinated way into a media stream which may comprise a channel or stream of at least one of text, video and audio information. An advertiser, who wants for an ad to take advantage of the coordinated ad placement, may subscribe to one or a set of product categories, service categories and/or brand categories (or specific brand(s)) and may for example submit multiple versions of his ad, each version designed to be most effective when seen after (or before) other ads of a chosen category. For example, an ad of an insurance company may be registered with two versions: one linked to ads about cars and one linked to ads about air travels. When the insurance ad is seen after an ad about cars, the ad will promote a specific car insurance (perhaps even mentioning the tariffs related to the specific car that was shown in the previous car ad). Instead, when the insurance ad is seen after an ad about air travels, it will promote a travel insurance perhaps mentioning air travelling. In this way, advertising messages from different advertisers and different brands can take advantage of the context prepared by other ads and reinforce each other.

A dynamic change of ads that are scheduled for placement can thus be achieved by a modification process depending on what is currently watched or viewed by the user. The modification process is configured to change or modify ad placementbased on the user's behavior. In case of web pages or web services, the clicking behavior of the user can be used to trigger the modification process so as to change the ad placement.

Additionally, automatic placement of comparative ads in a personal TV channel is enabled. A comparative ad is an ad in which a particular product or service specifically mentions a competitor by name, with the explicit purpose of showing why a comparable product or service of this competitor is inferior to the product or service advertised.

According to a first aspect, the modification process may comprise selecting a predetermined one of a plurality of stored versions of a triggered ad, based on the result of the determination of the category of the ad currently inserted and watched. Thereby, alternative versions of an ad which are adapted to the context of different categories can be selectively inserted.

According to a second aspect, which could be combined with the first aspect, the modification processing may comprise adding a stored comparative message to a triggered ad, said comparative message being associated with said result of said determination of the ad currently inserted and watched. This provides the advantage that specific targeted messages can be added to an ad in dependence on its determined category, so that automatic comparative advertising can be implemented.

According to a third aspect, which could be combined with the first or second aspect, the modification processing may comprise updating a playlist of a triggered ad by skipping or adding predetermined portions of the playlist based on the result of the determination of the ad currently inserted and watched. This enables adaptive configuration of video or audio advertisements based on the category of previously placed ads. Such a playlist may be a list of audio and/or video content items defined, stored, and selected to run either in sequence or, if a random playlist function is selected, in a random order.

According to a fourth aspect, which could be combined with any of the first to third aspects, the modification processing may be further based on a user profile of a recommender engine. Thereby, advertisements scheduled for placement may additionally be modified based on user preferences obtained from the recommender engine.

The triggering of the modification processing may be performed in response to a predetermined user action related to the target advertisement. The predetermined user action may be, for example, watching the target advertisement or clicking through a hyperlink of the target advertisement.

It is noted that the above apparatus can be implemented as discrete hardware circuitry with discrete hardware components, as an integrated chip, as an arrangement of chip modules, or as a signal processing device or computer device or chip controlled by a software routine or program stored in a memory.

### BRIEF DESCRIPTION OF THE DRAWINGS

The invention will now be described, by way of example, based on embodiments with reference to the accompanying drawings, wherein:
Fig. 1 shows a schematic block diagram of a coordinated ad placement system according to an embodiment of the present invention;
Fig. 2 shows a flow diagram of a processing for triggering correlated ads according to an embodiment of the present invention; and
Fig. 3 shows a flow diagram of a modification process for triggered ads according to an embodiment of the present invention.

### DESCRIPTION OF EMBODIMENTS

Embodiments of the present invention will now be described based on an exemplary ad placement system provided in combination with a recommender system that rates content items, such as video or audio streams, websites, TV programs, movies, etc., and which allows scheduling of content and ads such as of video, audio or text ads.

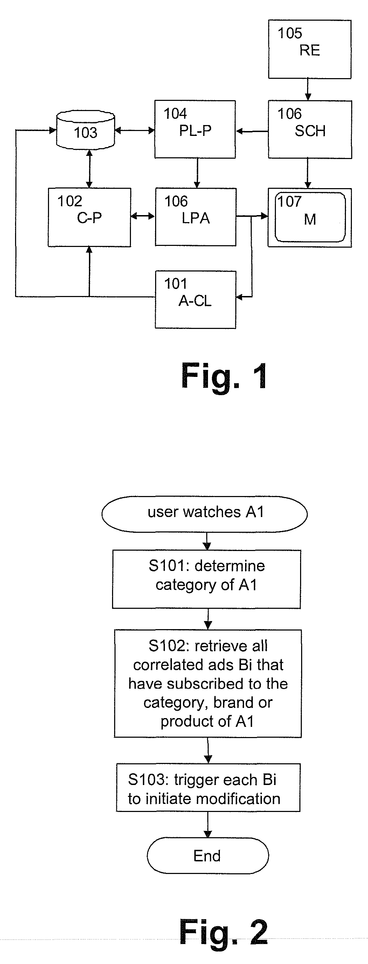

Fig. 1 shows a schematic block diagram of a recommender system with ad placement functionality, which comprises an ad data store 103 (e.g. a hard disk drive) in which ads can be stored together with associated categories that advertisers have subscribed to. The source (not shown) of content into which scheduled ads can be inserted may, for example, be an electronic program guide (EPG) service on the Internet, which provides information data on TV programs. It is noted that any number of personalized content channels could be provided. Received content items are filtered and supplied to a respective recommender engine (RE) 105. Thus, each personalized content channel may have its own recommender engine 105 associated therewith. Each recommender engine 105 and hence personalized content channel may have a user profile associated therewith. The output of the recommender engine 105 is connected to a content scheduler (SCH) 106 that schedules the content for presentation on a user interface, e.g. display on a monitor (M) 107.

Additionally, an ad placement processor (PL-P) 104 is provided, which is connected to the ad data store 103 so as to place selected or scheduled ads in a content channel in association with a matching content item or event. The placement of the ads at the ad placement processor 104 is based on output information of the content scheduler 106. Ads to be placed are thus derived from the ad data storage 103 into which ads may be downloaded or uploaded, e.g., via the Internet, from ad suppliers (e.g. advertisers). The ads selected for placement within a predetermined time period may be separately stored as a list of placed ads (LPA) 106 which is successively inserted into or added to the media stream of content items supplied to the monitor 107.

Additionally, a coordinated selection and/or placement of ads can be achieved by a coordinating processor (C-P) 102 which may be provided separately or as an additional functionality of the ad placement processor 104. The coordinating processor 102 is provided with read/write access from and to the ad data store 103, respectively, as well as the list of placed ads 106 and it is thus capable of modifying, dropping or replacing ads stored in the list of placed ads 106.

The current ad, which is supplied to the monitor 107 and presumably watched by a user, can also be accessed by an ad classifier (A-CL) 101 which determines the category of a currently inserted and watched ad, e.g., based on the ad content itself, based on meta-data associated to the ad, or based on an associated category (e.g. service, product, brand etc.) which an ad supplier has subscribed to and which may be retrieved from the ad data storage 103. The ad category determined by the ad classifier 101 is supplied to the coordinating processor 102 which initiates a modification processing of correlated ads of the list of scheduled ads 106.

The operation of the apparatus of Fig. 1 will now be described in more detail. Information data of a current content item to be played out on a personalized content channel is gathered from a content source (e.g. via the internet) or obtained via other means, e.g., via transmission in the vertical blanking interval of an analog TV broadcast signal or via digital video broadcast (DVB) transport streams, or combinations of any of the above. A content item may be a TV program, data stream containing video and/or audio data or a segment of a program etc.

The information data may comprise a plurality of attributes and attribute values associated with a content item such as title, actors, director and genre. Each user profile is based on the information data together with data indicating the "like" or "dislike" of the user. The rating of a "like" and "dislike" can be based on feedback on content items that pass an associated filter (not shown in Fig. 1). This feedback can be given as explicit rating by the users that use the particular personalized content channel. The ratings can be made in several ways. For example, the user can, using a remote control device, indicate for a currently selected content item or a given attribute of the current content item his rating ("like" or "dislike") by pressing appropriate buttons on a user interface (e.g. the remote control device). Alternatively, the behaviour of the user can be observed, so that fixed rules for all users can be replaced by rules that are "learned" and personalized for each user. In a more advanced setting, a "like" degree on a discrete or continuous scale can be provided or calculated instead of just a "like" or "dislike" classification.

When information data of a content item passes the associated filter, this information data is forwarded to the recommender engine 105. The recommender engine calculates a "like" degree or rating, based on its associated user profile, for this subsequent content item. The information data associated to the subsequent content item is then forwarded, along with the computed rating, to the content scheduler 106, which subsequently computes a recording schedule that will be used to schedule the recording of content items offered by the recommender engine 105 for display via the monitor 107. In particular, the content scheduler 106 may primarily consider the content items of high like degree or rating while still considering sufficient new content for each personalized content channel.

Use or user profiles can be derived using implicit profiling and explicit profiling. Implicit profiling methods derive content use profiles unobtrusively from the user's use histories, e.g., sets of TV shows watched and not watched. Explicit profiling methods may derive content use profiles by letting the user specify ratings on the level of content items. A user interface (not shown) may be provided, which may be for example a remote control or any other type of control device by which the user can control use of a content item. The user interface may also be implemented on a display screen that a user can interact with, e.g. a touch screen.

The ad placement functionality of the recommender system of Fig. 1 can be adaptable and scaleable to all kinds of ads input from various ad suppliers. The ad placement processor 104 may for example be adapted to schedule infomercial-type long-form ad content with simple call-to-action or transaction functionality (order brochure etc.). Branded channels may be formed by providing advertiser videos with call-to-action or transaction (text-based) functionality. Additionally, banners may be scheduled by placing them on an EPG or pay-TV user interface pages or by providing links to editorial and branded channels or to pre-recorded videos. A priority campaign may be initiated by scheduling prioritized and prominent display of a video ad or branded channel on a "start page" (if any) with preloaded content. As an additional option, pre-, mid- and/or post-roll placement may be scheduled by replaying short ads before, during (at predefined cutting points) or after an event (e.g. presentation of a content item). As a further option, overlays may be scheduled over video ads such as links so as to trigger transactions. The scheduled auxiliary media may be a static digital placement that will be displayed on a player's screen whenever the user pauses a video clip, a graphic that slides over the bottom of the video-viewing screen without interrupting the clip, an ad that occupies only a portion of the displayed frame, e.g., the lower 33% of the frame (placement in the lower third generally ensures that the face of an on-air person is not obscured), or an ad (e.g. an overlay) that upon interaction transfers a viewer to a longer-form video or a branded channel.

Video ads scheduled and placed by the ad placement processor 104 may comprise so-called "infomercials (i.e. a long-form video that is mapped to events and inserted into channels as visible programming, as opposed to the relatively short pre-, mid-, and post-roll ads that have been inserted by the channel provider).

The provision of the coordinating processor 102 with ad classifying feedback via the ad classifier 101 enables targeted advertising that allows advertisers to place advertisements in a coordinated way. An advertiser can subscribe to a set of categories (e.g. service, product and/or brand categories) associated with their ads and stored together with these ads (e.g. in the ad data store 103). Here, subscription means that the ads will be placed in a coordinated manner based on the subscribed categories. Furthermore, multiple versions of a specific advertisement may be supplied and stored, each version designed to be most effective when seen after (or before) other advertisements of the chosen product category.

This coordinated ad placement functionality can be provided as an addition to an existing ad management or placement system that allows advertisers to register ads by providing standard information about the product category, the ad, the target audience, etc. Additionally, the ad management system now additionally allows registering multiple versions of the ad to be triggered in response to particular user actions related to other advertisements. For the case of personal TV channels, the user action may be "watching the ad", i.e. the ad is currently being inserted into the media stream and watched by the user. The specific ads that will trigger the modification (e.g. change of version of the ad) at the coordinating processor 102 are specified in terms of the category determined at the ad classifier 101, e.g. product categories, advertisement types or genres, or even brand or product name.

Fig. 2 shows a flow diagram of a possible sequence of processing steps associated to triggering correlated ads according to an embodiment, which can be implemented in the correlating processor 102 in combination with the ad classifier 101 which may be implemented as an additional internal functionality or routine of the correlating processor 102.

The procedure is initiated by a predetermined user action, e.g. when the user watches a target advertisement (A1). In the first step S101, the category of the target advertisement (A1) is determined by the ad classifier 101. Then, in step S102 a set of all advertisements (Bi) of the list of placed advertisements 106 that have subscribed to ads of the category of A1 (e.g. brand of A1, or product/service shown in A1 etc.) is retrieved. Each of the retrieved ads (Bi) is triggered in step S103 for a predetermined modification process adapted to provide coordinated ad placement.

Each triggered ad (Bi) may initiate a reaction to the trigger by, e.g., changing the version of the ad to be shown when the user selects the triggered ad (Bi). Video advertisements can be specified by means of playlists, each entry pointing to different parts of a video file. Hence, another reaction to the trigger could be updating the playlist of the video advertisement by skipping or adding certain parts related to different promotional material or to highlight different product features to better compare a product to the one shown in the target advertisement (A1).

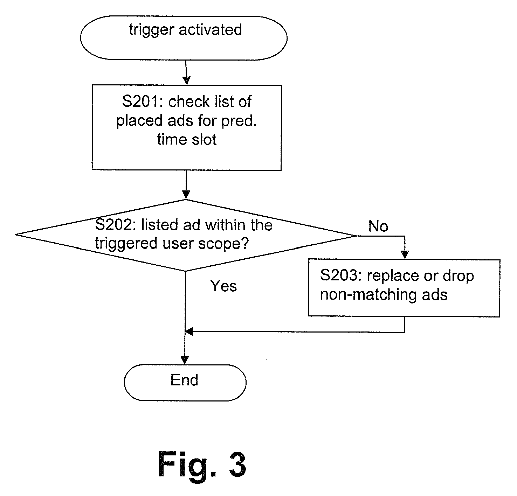

Fig. 3 shows a flow diagram of a modification process for triggered ads according to an embodiment, where placed ads of a predetermined time slot are subjected to the triggering and subsequent modification process. The predetermined time slot can be set by a user of the proposed system.

The procedure of Fig. 3 is initiated when the trigger is activated, i.e. the trigger condition(s) is/are met. In the first step S201, a list of ads placed within the predetermined time slot is retrieved (e.g. from the ad data store 103) and checked for matching or overlapping categories. Then, in step S202, it is checked whether each of the listed ads is within the triggered user scope as defined by the determined category of the target ad. If a listed ad is not within the triggered user scope (i.e. a non-matching ad), it is replaced by a stored alternative version or it is dropped if no alternative version is available (step S203). Otherwise, it is left unmodified.

It is noted that the above embodiments have been described for the case of video advertisements placed in a personal TV channel. The change of advertisements may be triggered in this case by the user action of "watching an ad". The invention can however also be applied to other media, such as web pages, emails, etc. In these cases, the change of advertisements can be triggered by other user actions such as "clicking through a hyperlink" or any other user reaction to the target advertisement.

The invention can also be applied in many other content-based and context-based advertising systems, such as web advertising, including ad management systems. It can be applied to (Internet-enabled) TV sets, personal video recorders (PVRs), mobile phones, set-top boxes, audio systems (including portable audio), and (web) services (including Internet video and music services) where recommenders are used.

In summary, the present invention relates to an apparatus, a method and a computer program product for automatically inserting advertisements into a media stream, wherein subscription information, which specifies categories of advertisements is stored and a category of a target advertisement is determined. Based on the result of the determination those advertisements of a stored list of scheduled advertisements that are subscribed to the determined category are triggered and subjected to a predetermined modification process selected based on the result of the determination.

While the invention has been illustrated and described in detail in the drawings and the foregoing description, such illustration and description are to be considered illustrative or exemplary and not restrictive. The invention is not limited to the disclosed embodiments. From reading the present disclosure, other modifications will be apparent to persons skilled in the art. Such modifications may involve other features which are already known in the art and which may be used instead of or in addition to features already described herein.

Variations to the disclosed embodiments can be understood and effected by those skilled in the art, from a study of the drawings, the disclosure and the appended claims. In the claims, the word "comprising" does not exclude other elements or steps, and the indefinite article "a" or "an" does not exclude a plurality of elements or steps. A single processor or other unit may fulfil at least the functions of Figs. 2 and 3 based on corresponding software routines. The computer program may be stored/distributed on a suitable medium, such as an optical storage medium or a solid-state medium supplied together with or as part of other hardware, but may also be distributed in other forms, such as via the Internet or other wired or wireless telecommunication systems. The mere fact that certain measures are recited in mutually different dependent claims does not indicate that a combination of these measures cannot be used to advantage. Any reference signs in the claims should not be construed as limiting the scope thereof.

## Claims

1. A method of automatically inserting advertisements into a media stream, said method comprising:
a) storing subscription information which specifies categories of advertisements to be scheduled for insertion;
b) determining a category of a target advertisement;
c) triggering based on the result of said determining step those advertisements of a stored list of scheduled advertisements, which according to their subscription information are subscribed to the determined category; and
d) subjecting triggered advertisements of said list of scheduled advertisements to a predetermined modification process selected based on said result of said determining step.

2. The method according to claim 1, wherein said categories specified by said subscription information comprises at least one of a service category, a product category and a brand category.

3. The method according to claim 1 or 2, wherein said modification processing comprises selecting a predetermined one of a plurality of stored versions of a triggered advertisement based on said result of said determining step.

4. The method according to any one of the preceding claims, wherein said modification processing comprises adding a stored comparative message to a triggered advertisement, said comparative message being associated with said result of said determining step.

5. The method according to any one of the preceding claims, wherein said modification processing comprises updating a playlist of a triggered advertisement by skipping or adding predetermined portions of said playlist based on said result of said determining step.

6. The method according to any one of the preceding claims, wherein said modification processing is further selected based on a user profile of a recommender engine.

7. The method according to any one of the preceding claims, wherein said media stream comprises a stream of at least one of text, video and audio information.

8. The method according to any one of the preceding claims, wherein said triggering is performed in response to a predetermined user action related to said target advertisement.

9. The method according to claim 8, wherein said predetermined user action is watching said target advertisement.

10. The method according to claim 8, wherein said predetermined user action is clicking through a hyperlink.

11. An automatic apparatus for automatically inserting advertisements into a media stream, said method comprising:
a) a memory (103) for storing subscription information which specifies categories of advertisements to be scheduled for insertion;
b) a classifier (101) for determining a category of a target advertisement;
c) a coordinating processor (102) for triggering based on an output of said classifier (101) those advertisements of a stored list of scheduled advertisements, which according to their subscription information are subscribed to the determined category, and for subjecting triggered advertisements of said list of scheduled advertisements to a predetermined modification processing selected based on said output of said class detector (101).

12. A computer program product comprising code means for producing the steps of any one of method claims 1 to 10 when run on a computer device.
